# EUROPEAN PATENT APPLICATION

(11) **EP 3 115 953 A1**
(43) Date of publication of application: **11.01.2017**
(21) Application number: 15001999.0
(22) Date of filing: 06.07.2015
(51) Int. Cl.: G06Q 30/02

(54) **METHOD FOR MANAGING AND TRANSMITTING INFORMATION OF INTEREST FOR A USER, AND A SYSTEM FOR IMPLEMENTING THE METHOD**

(71) Applicant: Peoplelink s.r.l., 20153 Milano (IT)
(72) Inventor: Camurati, Pietro, 20129 Milano (IT)

(57) **Abstract**

Method for managing and transmitting information wherein is comprised an user equipped with a user electronic device, a management server provided to an employer, an information database provided to said employer, the method comprising the steps of: A - collecting a plurality of information of interest, in particular advertising information; B - filling said database with said information collected at step A; C - among said server, taking a census of said user; D - by means of said electronic device of the user, transmitting to said server attendance information of said user in a working place; E - among said server, extracting from said database at least an information of interest to be transmitted to said user electronic device on the basis of the attendance information received at step D.

## Description

### TECHNICAL FIELD

The present invention refers to a method for managing and transmitting information in a contest of a service for acquiring the work attendances, and a system arranged for implementing this method.

### STATE OF THE ART

The large part of workers inform the employer of their attendance clocking in at the beginning and clocking out at the end of the working day. This activity is done passing a badge in a specific time clock machine. This approach has several inconveniences: the employee must have physically a badge having small dimension and easy to be kept.

Employees working outside the working place can't demonstrate their presence in the place where they are working. The employer can't easily send service messages or other information by means of a single platform that is also able to register attendances. For solving these problems, some operators have developed remote attendance solutions using SMS; the employee with his mobile phone sends a predefined SMS to a dedicated phone number, which archives the attendance. Even if this approach simplifies the work of employees working outside the working place reveals limits: the system registers the attendance of the employee without offering him any other additional service or utility.

### SUMMARY

The Assignee recognizes that known solutions do not provide sufficient flexibility to the employers and few utility or interesting services to the employees.

The main scope of present invention is to provide a method for managing the information of interest linked to the notification of attendances, which allows easily and economically to overcome the problems of state of the art.

A further scope of the present invention is to provide a method and a system able to guarantee the vision from the user of the information, for example an advertising.

A first aspect of the present invention is to create a method for providing information considered of interest for an employee on the base of his demographical and company profile.

The inventive idea of the present invention is based on the synergic use of the smartphone of the employee, a server of the employer and a database of the same employer conveniently configured for guarantying an efficient management and transmission of information considered of interest by the employer. Generally, the present invention concerns a method for managing and transmitting information wherein is comprised an user equipped with a user electronic device, a management server provided to an employer, an information database provided to said employer, the method comprising the steps of:
A - collecting a plurality of information of interest, in particular advertising information;
B - filling said database with said information collected at step A;
C - among said server, taking a census of said user;
D - by means of said user electronic device, transmitting to said server attendance information of said user in a working place;
E - among said server, extracting from said database at least an information of interest to be transmitted to said user electronic device on the basis of the attendance information received at step D.

A second aspect of the present invention relates to user electronic device comprising:
- first memory means configured for memorizing at least a program configured to manage the attendance information of a user;
- second memory means configured for memorizing one or more information of interest;
- a processor connected to said first and second memory means and adapted to execute said program;
- communication means configured to transmit/receive data to/from a communication network;
wherein said program comprises code that when is executed by said processor:
- transmit attendance information through said communication means;
- receive information of interest;
- display said information of interest in a portion of a screen of said device.

A further aspect of the present invention relates to a system for managing and transmitting information comprising:
- a plurality of user electronic devices configured for implementing steps of above described method;
- a management server configured for implementing steps of above described method;
- at least a database configured for implementing steps of above described method;

Further advantageous technical features are described in the depending claims.

### FIGURES

Technical characteristics of the present invention and its advantages, will be better understood thanks to the following description and drawings of different embodiments of said invention given as non limitative examples thereof, wherein:
- figure 1 illustrates a block diagram of operations intended to execute a method according to the present invention;
- figure 2 illustrates a system configured to implement the method according to the present invention.

### DETAILED DESCRIPTION

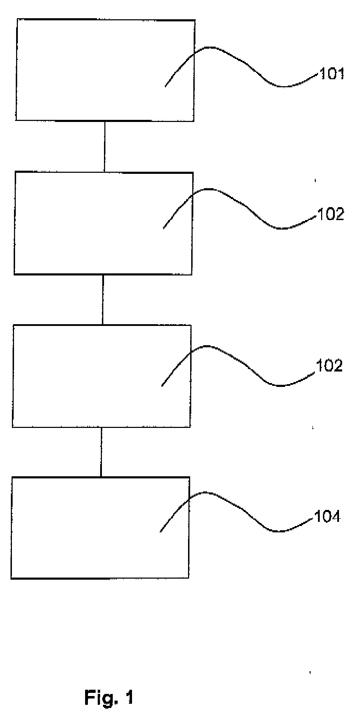

Said description and said figures are to be considered illustrative and non-restrictive; therefore the present invention could be implemented according to other and different form; furthermore, said drawings are schematic and simplified. Figure 1 shows a block diagram of operations implemented according to the present invention.

According to the present invention, an employer is enabled to provide information of interest to its workers or collaborators on the basis of actions that workers/collaborators carry out every day and typically more than once daily: register of attendance ("clocking in / out").

Consequently, according to the present invention it's provided a user equipped with a user electronic device (hereafter the *smartphone*), a management server provided to an employer, an information database provided to said employer. With term database it's intended for the present invention a database system, so a server connected to a plurality of non-volatile disks configured to manage the reading and the writing of data on said disks.

As illustrated in the block 101, the first step is to collect a plurality of information of interest, in particular advertising information. The information of interest can be represented according to one or more format: according to a first embodiment through a text, according to a further embodiment through an image, according to a third embodiment through an images and text.

Said images can be moveable images.

According to an embodiment of this step, the employer evaluates a plurality of suppliers of products and/or services and selects some of them that considers potentially interesting for its workers.

After, as shown in the block 102, the database is filled with the information collected at the previous step. In a preferred embodiment, a plurality of records is created, each of them represents an advertising information and it is memorized in the database. In a preferred embodiment, a record can indicate simply the name of the selected supplier, for example " Rossi's shoes - Rome" or alternatively an image with the logo of the supplier.

After, with block 103 the user is registered in the employer server for a census. This step is typically achieved when the present method is implemented for the first time (i.e. when a company request a system configured according to the method of the present invention), and every time a user is added, for example when a new employer is hired by an employer having a system configured according to the method of present invention. The census of the user typically includes the collection and memorization of its personal data, and further pertinent information as described here-below.

Then, with step 103, a user, by means of its *smartphone*, communicates attendance information associated to a specific working place to the server of the employer. When this step occurs, the clocking in/out is sent to the employer. The term working place of the user means that the employee can send its presence at work from its typical working place (for example the headquarter of the employer), or from an unusual working place, for example from the place of business trip. In a preferred embodiment, the *smartphone* of the user comprises a dedicated software (an *app*) which executes the telematics delivery of the attendance information to the server of the employer.

According to the method of present invention, the step 104 is performed, where at least an information of interest is extracted from the database in the server of the employer. The information of interest is sent to said user electronic device on the base of the attendance information previously received. In a particular embodiment of the method, said information of interest is extracted on the basis of the attendance information previously received. In other words, a tailored information is sent on the basis of the personal information of the user and other information eventually collected and on the basis of the kind of attendance (for example, the employee works often out-of-office). For example, a user is a 35-years-older man and works often out-of-office; the transmitted information, in particular the advertising information, can relate to restaurants.

In a particular embodiment, the attendance information comprises geopositioning information calculated through the geopositioning module (the GPS) of the user's *smartphone.* In this way, the information related to the attendance are even more accurate. As a consequence, the information of interest sent to the user can be even more specific and focused on the place where the user spends the large part of its time.

With reference to the previously mentioned example and on the basis of the attendance information collected by the geopositioning module, the 35-year-older man that is often out-of-office, travels frequently to Turin in the Mirafiori district. The information of interest provided to the user will be an advertising information on the restaurants of said district of Turin.

According to a further embodiment, the census of the user comprises collecting personal data of the user, as described above; and collecting information related to activities of interest for the user.

These information can comprise hobbies, leisure activities, cultural interests, etc. An example of census of a user according to the present invention is: "Mario Rossi, 40-years-older, employee of second level, employed in the headquarter, married", "Interests: cinema, literature, horseback riding". This information, as further described here-below, allows to select the information of interest stored in the database that better fit to the profile of "Mario Rossi",

In a further embodiment, according to method of the present invention is provided to combine the personal data previously collected, the information on the activities of interest previously collected and the information on geopositioning for selecting said information of interest from the database to be sent to the user electronic device.

In other words, the personal data, the attendance information and the information on the activities of interest are used for generating a query for extracting the best information of interest for the user from the database.

From the operation of census the personal data and the information relating to the activities of interest are obtained. The information of attendance are obtained from the process of registering the attendances of the employer. Here-below is illustrated an example: Bruno Verdi, employee, 40-years-older. Activities of interest: cinema. The personal data and the activities of interest on the server of the employer indicated said information. From the attendance information arises that from Monday to Wednesday the employee works in the offices of Turin, while on Thursday and Friday he works in the offices of Milan. According to these information, the query of extraction of the information of interest for the user will propose, for example, advertising information on cinema in Milan on Thursday and Friday and not in Turin for same days.

In an embodiment, the information of interest are transferred to the *smartphone* of the user contextually to the transmission of the attendance information that are collected through the *smartphone.* In other words, through the software configured to perform the telematics clocking in/out. In an embodiment, said software uses a portion of the screen for showing the information of interest proposed. For example, with reference to the previously explained example, a portion of the screen shows an image containing the logo of the "Cinema Paradiso" and the phrase "all Oscar awarded films - Turin" on Monday, Tuesday, Wednesday; and "Marchionatti Essay Cinema - Milan" on Thursday and Friday. So, when the user runs the software he has a section dedicated to some operations (for example, insert a clocking in or out, modify an entered clocking in/out, etc.) and a section dedicated to information of interest that are recovered from the database an transmitted to the *smartphone* of the user.

In a particular embodiment, the visualization of the information of interest occurs via a pop-up on which: in a first portion is notified the attendance information and in a second portion is shown to the user the information of interest.

The present invention further relates to a user electronic device, the *smartphone,* comprising:
- first memory means configured to memorize at least a program configured to manage the attendance information of a user;
- second memory means configured to memorize one or more information of interest;
- a processor connected to said first and second memory means and adapted to execute the program;
- communication means configured to transmit/receive data to/from a communication network, in particular a mobile phone network.

The program installed on the *smartphone* comprises code that when is executed by said processor realizes the following steps:
- transmitting attendance information through said communication means;
- receiving the information of interest;
- displaying the information of interest in a portion of a screen of said *smartphone.* In an embodiment, the visualization of the information of interest is contextual to the transmission of the attendance information. In other words, when the user runs the app for registering the telematics clocking in/out, he sees contextually the information of interest. In this sense, it's important that the algorithm loaded on the server runs some training telematics clocking in/out for being able of extracting the information of interest that better fit to the user,

The present invention furthermore relates to management server comprising:
- communication means adapted to communicate through a public communication network, in particular Internet;
- first memory means configured to memorize for each user attendance information received by the *smartphone* described above and a management program;
- second memory means of the server configured to memorize a plurality of information of interest;
- a processor connected to said communication means and said first and second memory means of the server and adapted to execute said program;
wherein the program comprises code that when it's executed by said processor:
- collects said plurality of information of interest;
- censuses one or more users;
- matches at least an information of interest to a user.

The present invention further relates to a database comprising a connecting interface, a processor and memory means, wherein the connecting interface is configured to communicate with a server of the type described above, and the memory means are configured to receive a plurality of information of interest and memorize them in a memory, and the processor is configured to extract an information of interest on the basis of the request received from the server as described above. In an embodiment the database is a Database Management System associated to a server described as above and consequently it receives a query, recovers one or more data on the basis of the query and provides an output.

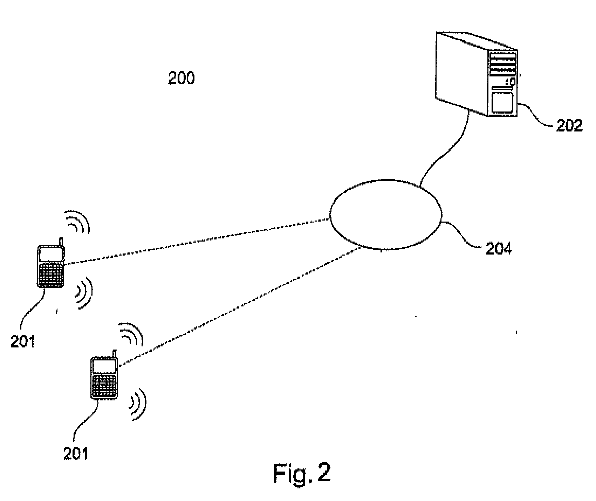

As shown on figure 2, the present invention further relates to a system for managing and transmitting information comprising:
- a plurality of user electronic devices 201 as described above, associated to a corresponding plurality of users;
- a management server 202 as described above;
- at least a database 202 as described above;
- wherein said devices communicate through a network 204 and implement steps of the method described above.

## Claims

1. Method for managing and transmitting information wherein is comprised an user equipped with a user electronic device, a management server provided to an employer, an information database provided to said employer, the method comprising the steps of:
A - collecting a plurality of information of interest, in particular advertising information;
B - filling said database with said information collected at step A;
C - among said server, taking a census of said user;
D - by means of said user electronic device, transmitting to said server attendance information of said user in a working place;
E - among said server, extracting from said database at least an information of interest to be transmitted to said user electronic device on the basis of the attendance information received at step D.

2. Method according to claim 1, wherein said attendance information comprises geopositioning information calculated through said electronic device in said step D.

3. Method according to claim 1 or 2, wherein said information of interest to be transmitted to said electronic device of the user is extracted also on the basis of the census taken at step C.

4. Method according to any of preceding claims wherein said step C comprising the steps of:
F - acquiring personal information of said user;
G - acquiring information indicative of activities of interest for said user.

5. Method according to claim 4 comprising the step of combining said personal information acquired at step F, said information indicative of activities of interest acquired at step G and said geopositioning information for selecting said at least an information of interest from said database to be transmitted to said user electronic device.

6. Method according to any of preceding claims, wherein said information are transmitted to said electronic device of the user contextually to the transmission of said attendance information effected by said user electronic device.

7. User electronic device comprising:
- first memory means configured to memorize at least a program configured to manage the attendance information of a user;
- second memory means configured to memorize one or more information of interest;
- a processor connected to said first and second memory means and adapted to execute said program;
- communication means configured to transmit/receive data to/from a communication network;
wherein said program comprises code that when is executed by said processor:
- transmits attendance information through said communication means;
- receives information of interest;
- displays said information of interest in a portion of a screen of said device.

8. Management server comprising:
- communication means adapted to communicate through a public communication network, in particular Internet;
- first memory means configured to memorize for each user attendance information received in accordance with step D of any one of preceding claims from 1 to 6 and a management program;
- second memory means configured to memorize a plurality of information of interest;
- a processor connected to said communication means and said first and second memory means and adapted to execute said program;
wherein said program comprises code that if executed by said processor:
- collects said plurality of information of interest;
- censuses one or more users;
- associates at least an information of interest to a user.

9. Database comprising a connecting interface, a processor and memory means, said connecting interface being configured for communicating with a server according to claim 8, said memory means being configured for receiving a plurality of information of interest and memorizing them in said memory means, said processor being configured for extracting an information of interest based on a request received from a server according to claim 8.

10. System for managing and transmitting information comprising:
- a plurality of user electronic devices according to claim 7 associated to a corresponding plurality of users;
- a management server according to claim 8;
- at least a database according to claim 9;
adapted to implement a method according to any of claims 1 to 6.

## Amended claims

### Amended claims in accordance with Rule 137(2) EPC.

**1.** Method for managing and transmitting Information wherein is comprised an user equipped with a user electronic device, a management server provided to an employer, an information database provided to said employer, the method comprising the steps of:
A - collecting a plurality of information of interest, in particular advertising information;
B - filling said database with said information collected at step A;
C - among said server, taking a census of said user;
D - by means of said user electronic device, transmitting to said server attendance information of said user in a working place;
E - among said server, extracting from said database at least an Information of Interest to be transmitted to said user electronic device on the basis of the attendance information received at step D
F - displaying the information of interest contextually to the transmission of the attendance Information.

**2.** Method according to claim 1, wherein said attendance information comprises geopositioning information calculated through said electronic device in said step D.

**3.** Method according to claim 1 or 2, wherein said information of interest to be transmitted to said electronic device of the user is extracted also on the basis of the census taken at step C.

**4.** Method according to any of preceding claims wherein said step C comprising the steps of:
F - acquiring personal information of said user;
G - acquiring information indicative of activities of interest for said user.

**5.** Method according to claim 4 comprising the step of combining said personal Information acquired at step F, said Information indicative of activities of interest acquired at step G and said geopositioning information for selecting said at least an information of interest from said database to be transmitted to said user electronic device.

**6.** Method according to any of preceding claims, wherein said information are transmitted to said electronic device of the user contextually to the transmission of said attendance information effected by said user electronic device.

**7.** User electronic device comprising:
- first memory means configured to memorize at least a program configured to manage the attendance Information of a user;
- second memory means configured to memorize one or more information of interest;
- a processor connected to said first and second memory means and adapted to execute said program;
- communication means configured to transmit/receive data to/from a communication network;
wherein said program comprises code that when is executed by said processor:
- transmits attendance information through said communication means;
- receives information of interest;
- displays said information of interest in a portion of a screen of said device contextually to the transmission of the attendance information.

**8.** Management server comprising:
- communication means adapted to communicate through a public communication network, In particular Internet;
- first memory means configured to memorize for each user attendance information received in accordance with step D of any one of preceding claims from 1 to 6 and a management program;
- second memory means configured to memorize a plurality of information of interest;
- a processor connected to said communication means and said first and second memory means and adapted to execute said program;
wherein said program comprises code that if executed by said processor:
- collects said plurality of information of interest;
- censuses one or more users;
- associates at least an information of interest to a user.

**9.** Database comprising a connecting interface, a processor and memory means, said connecting interface being configured for communicating with a server according to claim 8, said memory means being configured for receiving a plurality of information of interest and memorizing them in said memory means, said processor being configured for extracting an information of interest based on a request received from a server according to claim 8.

**10.** System for managing and transmitting information comprising:
- a plurality of user electronic devices according to claim 7 associated to a corresponding plurality of users;
- a management server according to claim 8;
- at least a database according to claim 9;
adapted to implement a method according to any of claims 1 to 6.

**1.** Method for managing and transmitting information wherein is comprised an user equipped with a user electronic device, a management server provided to an employer, an information database provided to said employer, the method comprising the steps of:
A - collecting a plurality of information of interest, in particular advertising information;
B - filling said database with said information collected at step A;
C - among said server, taking a census of said user;
D - by means of said user electronic device, transmitting to said server attendance information of said user in a working place;
E - among said server, extracting from said database at least an Information of interest to be transmitted to said user electronic device on the basis of the attendance information received at step D and census taken at step C;
wherein the census of said user comprises collecting personal data of the user and collecting information related to activities of interest for said user.

**2.** Method according to claim 1, wherein said attendance information comprises geopositioning information calculated through said electronic device in said step D.

**3.** Method according to any of preceding claims wherein said step C comprising the steps of:
F - acquiring personal information of said user;
G - acquiring Information indicative of activities of interest for said user.

**4.** Method according to claim 3 comprising the step of combining said personal information acquired at step F, said information indicative of activities of interest acquired at step G and said geopositioning information for selecting said at least an information of interest from said database to be transmitted to said user electronic device.

**5.** Method according to any of preceding claims, wherein said information are transmitted to said electronic device of the user contextually to the transmission of said attendance information effected by said user electronic device.

**6.** User electronic device comprising:
- first memory means configured to memorize at least a program configured to manage the attendance information of a user;
- second memory means configured to memorize one or more information of interest;
- a processor connected to said first and second memory means and adapted to execute said program;
- communication means configured to transmit/receive data to/from a communication network;
wherein said program comprises code that when is executed by said processor:
- transmits attendance information through said communication means;
- receives information of interest;
- displays said information of interest in a portion of a screen of said device contextually to the transmission of the attendance information.

**7.** Management server comprising:
- communication means adapted to communicate through a public communication network, in particular internet;
- first memory means configured to memorize for each user attendance Information received in accordance with step D of any one of preceding claims from 1 to 5 and a management program;
- second memory means configured to memorize a plurality of information of interest;
- a processor connected to said communication means and said first and second memory means and adapted to execute said program;
wherein said program comprises code that if executed by said processor:
- collects said plurality of information of interest;
- censuses one or more users;
- associates at least an information of interest to a user.

**8.** Database comprising a connecting interface, a processor and memory means, said connecting interface being configured for communicating with a server according to claim 8, said memory means being configured for receiving a plurality of information of interest and memorizing them in said memory means, said processor being configured for extracting an Information of interest based on a request received from a server according to claim 7.

**9.** System for managing and transmitting information comprising:
- a plurality of user electronic devices according to claim 6 associated to a corresponding plurality of users;
- a management server according to claim 7;
- at least a database according to claim 8;
adapted to implement a method according to any of claims 1 to 5.

**1.** Method for managing and transmitting information wherein is comprised an user equipped with a user electronic device, a management server provided to an employer, an information database provided to said employer, the method comprising the steps of:
A - collecting a plurality of information of interest, in particular advertising information;
B - filling said database with said information collected at step A;
C - among said server, taking a census of said user;
D - by means of said user electronic device, transmitting to said server attendance information of said user in a working place;
E - among said server, extracting from said database at least an Information of interest to be transmitted to said user electronic device on the basis of the attendance information received at step D and census taken at step C;
F - displaying the information of interest contextually to the transmission of the attendance information;
wherein the census of said user comprises collecting personal data of the user and collecting information related to activities of interest for said user.

**2.** Method according to claim 1, wherein said attendance information comprises geopositioning information calculated through said electronic device In said step D.

**3.** Method according to any of preceding claims wherein said step C comprising the steps of:
F - acquiring personal information of said user;
G - acquiring information indicative of activities of interest for said user.

**4.** Method according to claim 3 comprising the step of combining said personal information acquired at step F, said information indicative of activities of interest acquired at step G and said geopositioning information for selecting said at least an Information of interest from said database to be transmitted to said user electronic device.

**5.** Method according to any of preceding claims, wherein said information are transmitted to said electronic device of the user contextually to the transmission of said attendance Information effected by said user electronic device.

**6.** User electronic device comprising:
- first memory means configured to memorize at least a program configured to manage the attendance information of a user;
- second memory means configured to memorize one or more information of interest;
- a processor connected to said first and second memory means and adapted to execute said program;
- communication means configured to transmit/receive data to/from a communication network;
wherein said program comprises code that when is executed by said processor:
- transmits attendance information through said communication means;
- receives information of Interest;
- displays said Information of Interest in a portion of a screen of said device contextually to the transmission of the attendance information.

**7.** Management server comprising:
- communication means adapted to communicate through a public communication network, in particular Internet;
- first memory means configured to memorize for each user attendance information received in accordance with step D of any one of preceding claims from 1 to 5 and a management program;
- second memory means configured to memorize a plurality of Information of interest;
- a processor connected to said communication means and said first and second memory means and adapted to execute said program;
wherein said program comprises code that if executed by said processor:
- collects said plurality of Information of interest;
- censuses one or more users;
- associates at least an information of interest to a user.

**8.** Database comprising a connecting interface, a processor and memory means, said connecting interface being configured for communicating with a server according to claim 8, said memory means being configured for receiving a plurality of information of interest and memorizing them In said memory means, said processor being configured for extracting an information of interest based on a request received from a server according to claim 7.

**9.** System for managing and transmitting information comprising:
- a plurality of user electronic devices according to claim 6 associated to a corresponding plurality of users;
- a management server according to claim 7;
- at least a database according to claim 8;
adapted to implement a method according to any of claims 1 to 5.
